# EUROPÄISCHE PATENTSCHRIFT

(11) **EP 3 611 738 B1**
(45) Veröffentlichungstag und Bekanntmachung des Hinweises auf die Patenterteilung: **19.01.2022**
(21) Anmeldenummer: 18188961.9
(22) Anmeldetag: 14.08.2018
(51) Int. Cl.: B60L 53/10, B60L 53/14, H01B 7/42, B60L 53/18, B60L 53/16

(54) **KÜHLMANSCHETTE FÜR ENERGIELEITUNGEN**
COOLING CUFF FOR ENERGY CONDUITS
MANCHON DE REFROIDISSEMENT POUR CONDUITE D'ÉNERGIE

(43) Veröffentlichungstag der Anmeldung: 19.02.2020
(73) Patentinhaber: Gebauer & Griller Kabelwerke Gesellschaft m.b.H., 1190 Wien (AT)
(72) Erfinder: FRÖSCHL, Karl, 2171 Herrnbaumgarten (AT)
(74) Vertreter: KLIMENT & HENHAPEL

(56) Entgegenhaltungen:
- WO-A1-2017/064157
- DE-B3-102010 050 562
- DE-B3-102016 117 261

## Beschreibung

### GEBIET DER ERFINDUNG

Die Erfindung betrifft eine Kühlmanschette zur Ableitung von Wärme von mindestens einer Energieleitung an ein Kühlfluid, umfassend eine Tülle zur zumindest abschnittsweisen Durchführung der mindestens einen Energieleitung, ein Gehäuse, welches die Tülle zumindest abschnittsweise umgebend angeordnet ist, wobei zwischen der Tülle und dem Gehäuse ein Kühlvolumen zur Aufnahme des Kühlfluides ausgebildet ist, wobei das Kühlvolumen vorzugsweise durch die Tülle und das Gehäuse begrenzt ist, wobei das Gehäuse einen ersten Fluidanschluss zur Einleitung des Kühlfluides und einen zweiten Fluidanschluss zur Ableitung des Kühlfluides umfasst, wobei die Tülle zumindest abschnittsweise von dem Kühlfluid umströmbar ist.

### STAND DER TECHNIK

Schnellladesysteme, die im Bereich der Elektromobilität zum Einsatz kommen, ermöglichen es, innerhalb kurzer Zeit eine Li-Ionen-Batterie eines Elektrofahrzeuges zu einem erheblichen Teil zu laden. Gängige Elektrofahrzeug-Modelle sind durchschnittlich in 20 bis 30 Minuten zu 80% vollgeladen. Es sind jedoch immer schneller werdende Lademöglichkeiten für Elektrofahrzeuge notwendig, um längere Strecken, bei welchen mehrmals die Li-Ionen-Batterie geladen werden muss, in einer akzeptablen Zeit zurücklegen zu können. Hohe Ladeströme erzeugen Verlustwärme, sodass die Ladestation und vor allem das Ladekabel nach einer effizienten Kühlung verlangen. Da sowohl Stecker als auch Ladekabelquerschnitte genormt sind und für eine vernünftige Handhabung nicht zu steif sein sollten, sind die Querschnitte begrenzt, wodurch speziell im Bereich der Verbindung Stecker-Ladekabel beim Laden oft hohe Temperaturen entstehen.

Einen wesentlichen Faktor beim Betrieb von den oben beschriebenen Ladekabeln stellen somit die Verluste bei der Stromübertragung dar, die von der Betriebstemperatur abhängig sind. Überschreitet die Temperatur die zulässigen Werte, wird der Ladevorgang aufgrund einer zu starken Wärmeentwicklung, die nicht abgeführt werden kann, unterbrochen.

Lösungen zur Kühlung von Kabeln aus anderen Gebieten der Technik, beispielsweise mit Fluidkanälen im Kabel, können hier kaum sinnvoll eingesetzt werden. Für eine Anordnung von Fluidkanälen im Ladekabel wäre nämlich eine Vergrößerung des Querschnittes des Ladekabels erforderlich, was aber aufgrund der genormten Querschnitte des Ladekabels und des Steckers nicht zulässig ist. Weiters würde sich durch eine Vergrößerung des Querschnittes des Ladekabels auch die Steifigkeit des Ladekabels erhöhen, was wiederum die Handhabung des Ladekabels für den Benutzer negativ beeinträchtigen würde.

DE 102016117261 B3 beschreibt ein System aus einem Steckverbinder, einem fluidgekühlten Kabel und einer Anschlusseinheit, wobei das fluidgekühlte Kabel an einem Ende mit dem Steckverbinder und an einem anderen Ende mit der Anschlusseinheit verbunden ist. Die Anschlusseinheit umfasst ein Gehäuse mit einer Kabelanschlussöffnung, einer Fluideingangsöffnung und einer Fluidausgangsöffnung. Das an der Anschlusseinheit angeschlossene Kabel weist im Querschnitt eine zentrale Kühlflüssigkeitsleitung auf. Um die Kühlflüssigkeitsleitung herum sind die einzelnen Leiter positioniert, wobei die Leiter von einer flüssigkeitsdichten Folie umschlossen sind.

### AUFGABE DER ERFINDUNG

Es ist daher eine Aufgabe der vorliegenden Erfindung, eine Kühlmöglichkeit für Energieleitungen zur Verfügung zu stellen, die die oben genannten Nachteile vermeidet. Insbesondere soll der Querschnitt der Energieleitungen weiterhin gemäß den anzuwendenden Normen gestaltet werden können, und es soll eine einfache Handhabung der Energieleitungen gewährleistet sein.

### DARSTELLUNG DER ERFINDUNG

Die eingangs gestellte Aufgabe wird bei einer Kühlmanschette zur Ableitung von Wärme von mindestens einer Energieleitung an ein Kühlfluid, umfassend eine Tülle zur zumindest abschnittsweisen Durchführung der mindestens einen Energieleitung, ein Gehäuse, welches die Tülle zumindest abschnittsweise umgebend angeordnet ist, wobei zwischen der Tülle und dem Gehäuse ein Kühlvolumen zur Aufnahme des Kühlfluides ausgebildet ist, wobei das Kühlvolumen vorzugsweise durch die Tülle und das Gehäuse begrenzt ist, wobei das Gehäuse einen ersten Fluidanschluss zur Einleitung des Kühlfluides und einen zweiten Fluidanschluss zur Ableitung des Kühlfluides umfasst, wobei die Tülle zumindest abschnittsweise von dem Kühlfluid umströmbar ist, erfindungsgemäß dadurch gelöst, dass die Kühlmanschette weiters mindestens ein Fixiermittel umfasst, mittels dessen das Gehäuse an der Tülle lösbar fixiert ist, wobei das mindestens eine Fixiermittel und das Gehäuse unter Zwischenlage der Tülle verschraubbar sind.

Tüllen werden üblicherweise zum Schutz von Kabeln oder Zügen bei Karosseriedurchführungen oder zur Abdichtung von Kabeldurchführungen z.B. in der Spritzwand von Kraftfahrzeugen verwendet.

Die vorliegende Erfindung ist grundsätzlich bei allen Arten von Energieleitungen in vorteilhafter Weise einsetzbar, wobei es sich bei der wenigstens einen Energieleitung um genau eine Energieleitung oder um zwei, drei oder mehr Energieleitungen handelt. Im Fall von mehreren Energieleitungen können diese gebündelt oder lose verlegt sein. Die Tülle kann dann so angeordnet werden, dass sie alle diese Energieleitungen umgibt. Die Energieleitungen umfassen vorzugsweise einen Leiter, beispielsweise aus Kupfer oder Aluminium, und eine elektrische Isolierung, beispielsweise aus Silikon, die den Leiter umfänglich umgibt. Der Leiter kann beispielsweise ein Draht oder ein Litzenleiter sein.

Der Einsatz der erfindungsgemäßen Kühlmanschette lässt sich wie folgt zusammenfassen: Abschnittsweise kann in Bereichen der mindestens einen Energieleitung, in denen eine hohe Wärmeentwicklung auftritt, zur Kühlung der mindestens einen Energieleitung eine erfindungsgemäße Kühlmanschette auf der mindestens einen Energieleitung angeordnet werden. Die Kühlmanschette umfasst eine Tülle, ein Gehäuse und ein Fixiermittel.

Die Tülle befindet sich zumindest abschnittsweise innerhalb des Gehäuses, wodurch ein Kühlvolumen ausgebildet wird, das vorzugsweise durch die Tülle und das Gehäuse begrenzt wird. Das Kühlvolumen ist ausreichend groß ausgebildet, sodass es die Tülle bzw. die wenigstens eine Energieleitung und eine zur Kühlung der mindestens einen Energieleitung ausreichende Menge des Kühlfluides aufnehmen kann.

Das mindestens eine Fixiermittel dient der lösbaren Fixierung des Gehäuses an der Tülle. Das mindestens eine Fixiermittel und das Gehäuse sind unter Zwischenlage der Tülle verschraubbar.

Zur Ein- und Ableitung des Kühlfluides weist das Gehäuse zwei Fluidanschlüsse auf, die auf keine speziellen Ausgestaltungen beschränkt sind. Querschnittsform und Größe der Fluidanschlüsse sind grundsätzlich beliebig und können zueinander gleich oder unterschiedlich gewählt sein. Die Fluidanschlüsse können gewindelos, mit einem Außengewinde oder mit einem Innengewinde ausgeführt sein.

Vorzugsweise umströmt das Kühlfluid innerhalb des Gehäuses bzw. im Kühlvolumen die mindestens eine Energieleitung zumindest teilweise vollumfänglich, um eine möglichst große Kühlwirkung zu erzielen. D.h. entlang der Längsachse der Tülle umgibt die Tülle zumindest abschnittsweise die mindestens eine Energieleitung vollumfänglich. Klarerweise ist das oben Geschriebene so zu verstehen, dass die Tülle zwischen Kühlfluid und der mindestens einen Energieleitung angeordnet ist.

Durch die Positionierung der Tülle zwischen Gehäuse und Fixiermittel wird auf konstruktiv und herstellungstechnisch einfache Weise sichergestellt, dass das Kühlvolumen dicht ist und somit im Betriebszustand kein Kühlfluid ungewollt austreten kann. Es wäre allerdings auch vorstellbar, dass zur Abdichtung eine Dichtung, beispielsweise ein Dichtring, zum Einsatz kommt.

Bei einer bevorzugten Ausführungsform der erfindungsgemäßen Kühlmanschette ist vorgesehen, dass die Tülle und das Gehäuse aus einem Kunststoff bestehen. Dadurch wird die Masse der Kühlmanschette reduziert. Außerdem besitzt die Kühlmanschette bei Verwendung von entsprechenden Kunststoffen eine gewisse Elastizität.

Die Tülle besteht vorzugsweise aus einem besonders gut wärmeleitenden Kunststoff, beispielsweise aus Ethylen-Propylen-Dien-Kautschuk (EPDM), wobei das EPDM auch mit wärmeleitfähigen Komponenten gefüllt werden kann, um eine besonders gute Wärmeübertragung von der mindestens einen Energieleitung auf das Kühlfluid zu ermöglichen.

Vorzugsweise ist das Gehäuse aus Kunststoff gefertigt. Es wäre allerdings auch vorstellbar, dass das Gehäuse aus Metall oder einer Kombination aus Kunststoff und Metall gefertigt ist. Beispielsweise ergibt sich bei metallischer Ausführung einer Stirnwand des Gehäuses der Vorteil, dass Wärme über die Stirnwand abgestrahlt werden kann, wodurch die Kühlleistung der Kühlmanschette zusätzlich verbessert werden kann. D.h. die Stirnwand hat in diesem Fall die Funktion eines Kühlblechs.

Das Gehäuse kann, je nach Möglichkeit der Montage, einstückig oder aus mehreren Teilen zusammengesetzt ausgeführt sein.

Durch die Verwendung von Kunststoff und die sich daraus ergebende geringe Masse sowie gute Elastizität des Gehäuses und der Tülle ist die Kühlmanschette an einer Vielzahl von Energieleitungen mit unterschiedlichen Querschnittsgrößen einsetzbar. Weiters ist die Kühlmanschette kostengünstig herstellbar.

Bevorzugt ist bei der erfindungsgemäßen Kühlmanschette vorgesehen, dass das Gehäuse als Hohlzylinder ausgeführt ist. Der Hohlzylinder ist rohrförmig, d.h. er besitzt entlang seiner Achse eine Bohrung, und zeichnet sich durch eine einfache Herstellbarkeit aus.

Bevorzugt ist bei der erfindungsgemäßen Kühlmanschette vorgesehen, dass das mindestens eine Fixiermittel als Überwurfmutter ausgebildet ist, wobei vorzugsweise genau zwei Überwurfmuttern vorgesehen sind, die an gegenüberliegenden Seiten des Gehäuses angeordnet sind. Mit Hilfe von Überwurfmuttern lässt sich das Gehäuse ohne großen Aufwand an der Tülle fixieren. Weiters zeichnen sich Überwurfmuttern durch Kosteneffizienz, gute Verfügbarkeit und einfache Handhabung aus.

Bevorzugt ist bei der erfindungsgemäßen Kühlmanschette vorgesehen, dass ein Führungsmittel zur Zwangsführung des Kühlfluides vom ersten Fluidanschluss zum zweiten Fluidanschluss vorgesehen ist, wobei das Führungsmittel vorzugsweise durch ein metallisches Leitelement ausgebildet ist. Das Führungsmittel zur Zwangsführung, insbesondere das metallische Leitelement, verbindet somit die beiden Fluidanschlüsse und führt das Kühlfluid durch das Kühlvolumen. Durch die Zwangsführung des Kühlfluides kann beispielsweise die Tülle vom Kühlfluid vorteilhaft, vorzugsweise vollflächig, umströmt werden, wodurch die Verlustwärme des Leiters über die Tülle optimal an das Kühlfluid abgeleitet wird. Zudem wird ein guter Austausch des Kühlfluides erreicht, sodass eine hohe Kühlleistung erzielt wird. Bei dem metallischen Leitelement kann es sich beispielsweise um eine Feder oder um einen Draht handeln. Andere denkbare Ausführungsformen des metallischen Leitelements wären z.B. Netze oder Gitter, die zu Röhren geformt sind.

Gemäß dem oben Gesagten ist erfindungsgemäß ein System umfassend eine erfindungsgemäße Kühlmanschette und mindestens eine Energieleitung vorgesehen, wobei die Tülle die mindestens eine Energieleitung, vorzugsweise in einem abisolierten Bereich der Energieleitung, zumindest abschnittsweise umgibt. D.h. die Tülle umgibt zumindest abschnittsweise den isolierten, d.h. die Isolierung, oder den abisolierten Bereich, d.h. den Leiter, der Energieleitung. Vorzugsweise ist die Energieleitung jedoch im Bereich der Kühlmanschette abisoliert, da es ohne ein Vorhandensein der Isolierung zu einer besseren Wärmeübertragung zwischen Leiter und Kühlfluid kommt (unter Zwischenlage der Tülle). Es wäre aber auch vorstellbar, dass die Tülle sowohl den isolierten Bereich als auch den abisolierten Bereich der mindestens einen Energieleitung zumindest abschnittsweise umgibt.

Bei einer bevorzugten Ausführungsform des erfindungsgemäßen Systems ist vorgesehen, dass in einem Randbereich der Kühlmanschette die Tülle und eine Isolierung der mindestens einen Energieleitung überlappend angeordnet sind. Die Überlappung der Tülle und der Isolierung dient der Abdichtung, sodass kein Wasser bzw. kein Fluid von außen mit dem Leiter in Berührung kommt. Weiters dient die Überlappung der elektrischen Isolierung, sodass die Handhabung der mindestens einen Energieleitung im Bereich der erfindungsgemäßen Kühlmanschette unproblematisch ist.

Bevorzugt ist bei dem erfindungsgemäßen System vorgesehen, dass ein Kühlfluidreservoir vorgesehen ist, wobei das Kühlfluidreservoir durch einen Behälter einer Scheibenwaschanlage eines Kraftfahrzeuges ausgebildet ist, wobei das Kühlfluidreservoir fluidisch mit dem Kühlvolumen mittels der Fluidanschlüsse verbunden ist. Beispielsweise dienen Schlauchleitungen zur fluidischen Verbindung zwischen Kühlreservoir und Kühlvolumen, welche Schlauchleitungen vorzugsweise lösbar, besonders bevorzugt verschraubt oder gesteckt, mit den Fluidanschlüssen verbunden sind. Die Kühlmanschette wird somit mit einem Fluid, das als Kühlfluid dient, aus dem Kühlreservoir der Scheibenwaschanlage gespeist. Diese Ausführungsform ist kosten- und ressourceneffizient, da weder ein zusätzlicher Kühlmittelbehälter noch ein zusätzliches Kühlfluid benötigt werden. Alternativ wäre es allerdings auch möglich, dass die Kühlmanschette mit einer Motorkühlung des Kraftfahrzeuges gekoppelt ist. Dabei kann die Verlustwärme der zumindest einen Energieleitung als Abwärme von einer Fahrzeugheizung des Kraftfahrzeuges genutzt werden. Hat der Fahrer bzw. die Klimaautomatik die Fahrzeugheizung eingeschaltet, fließt das erwärmte Kühlfluid in Richtung eines Heizungskühlers. Dieser besitzt eine große Oberfläche und wird von Luft umströmt, die die Wärme aufnimmt und durch das Innenraumgebläse zu den Passagieren geleitet. Das Kühlfluid kühlt ab und kann erneut in die Kühlmanschette fließen, um dort ein weiteres Mal für Kühlung zu sorgen.

Bei einer bevorzugten Ausführungsform des erfindungsgemäßen Systems ist vorgesehen, dass das System dazu eingerichtet ist, mit Hilfe des Kühlfluides im Kühlvolumen Druck aufzubauen, um die Tülle auf die mindestens eine Energieleitung zu pressen. Dadurch ergibt sich eine, vorzugsweise vollumfängliche, Verbindung mit einem guten Kontakt zwischen der Energieleitung und der Tülle, was für eine gute Wärmeübertragung vorteilhaft ist. Die Tülle kann dabei die Isolierung der Energieleitung oder den Leiter der Energieleitung umgebend angeordnet sein. Der Druck kann dabei mittels beispielsweise einer Pumpe aufgebaut werden. Es wäre z.B. vorstellbar, dass eine Pumpe der Scheibenwaschanlage für den Druckaufbau verwendet wird, wobei innerhalb der Scheibenwaschanlage entsprechende Ventile angeordnet sind. Es wäre natürlich auch möglich, dass eine eigens für die erfindungsgemäße Kühlmanschette vorgesehene Pumpe zum Einsatz kommt.

Es wäre allerdings auch vorstellbar, dass innerhalb des Gehäuses kein Druck aufgebaut wird, wobei die Tülle bei solch einer Ausführungsform vorzugsweise entsprechend eng an der Energieleitung, insbesondere am Leiter, anliegt, um eine gute Wärmeübertragung zu ermöglichen.

Bevorzugt ist bei einem erfindungsgemäßen System vorgesehen, dass der Druck mit maximal 6 Bar begrenzt ist. Durch den Druck in diesem Bereich wird gewährleistet, dass die Tülle auf die mindestens eine Energieleitung gedrückt wird, um unter Zwischenlage der Tülle einen guten Wärmeübergang zwischen der mindestens einen Energieleitung und dem Kühlfluid herzustellen. Ein Druck in diesem Bereich lässt sich mit den oben genannten Mitteln problemlos erzeugen und gleichzeitig kann die Dichtheit der Kühlmanschette gewährleistet werden.

Bevorzugt ist bei dem erfindungsgemäßen System vorgesehen, dass die Tülle zumindest abschnittsweise in einer Spritzwand eines Kraftfahrzeuges angeordnet ist, wobei auch das Gehäuse zumindest abschnittsweise in der Spritzwand angeordnet ist und/oder das Gehäuse nur auf einer Seite der Spritzwand angeordnet ist. Im Bereich der Spritzwand ist eine Verwendung von Kühlmanschetten besonders vorteilhaft, da in diesem Bereich die Energieleitungen bereits standardmäßig durch Tüllen, die die Energieleitungen umfänglich umgeben, geführt werden. D.h. der konstruktive Herstellungsaufwand ist in diesem Fall äußerst gering. Auch ist eine Nachrüstung der Tülle mit dem Gehäuse möglich, um die erfindungsgemäße Kühlmanschette bzw. das erfindungsgemäße System kostengünstig zu verwirklichen.

Das Gehäuse kann dabei zumindest abschnittsweise in der Spritzwand angeordnet sein. Es wäre allerdings auch vorstellbar, dass das Gehäuse auf einer Seite direkt neben der Spritzwand angeordnet ist. Für eine Anordnung des Gehäuses neben der Spritzwand müsste die Tülle dementsprechend auch auf diesem Bereich der Energieleitung die Energieleitung umgeben. Vorteilhaft wäre in diesem Fall, dass die Durchführungsbohrung der Spritzwand für die die mindestens eine Energieleitung umgebende Tülle nicht vergrößert werden muss, da, wie oben bereits beschrieben, das Gehäuse direkt neben der Spritzwand angeordnet ist.

Bevorzugt ist bei einem erfindungsgemäßen System vorgesehen, dass das Kühlfluid Wasser und Glykol umfasst, wobei sich Wasser und Glykol durch Kosteneffizienz und gute Verfügbarkeit auszeichnen. Dies eröffnet die Möglichkeit, eine Koppelung der Kühlmanschette beispielsweise mit einer Scheibenwaschanlage eines Kraftfahrzeuges vorzunehmen.

Bei einer bevorzugten Ausführungsform des erfindungsgemäßen Systems ist vorgesehen, dass mindestens ein mit der mindestens einen Energieleitung verbundener Stecker vorgesehen ist, wobei die Tülle sowohl die mindestens eine Energieleitung als auch den mindestens einen Stecker umgebend angeordnet ist. Mit Hilfe der Kühlmanschette kann somit Wärme von einem Bereich der Energieleitung direkt beim Stecker und vom Stecker selbst abtransportiert werden. Dies ist vorteilhaft, weil es in diesem Bereich meist zu besonders hohen Verlustwärmen beim Stromtransport, beispielsweise beim Laden, kommt.

Bevorzugt ist bei einem erfindungsgemäßen System vorgesehen, dass die mindestens eine Energieleitung durch mindestens ein Batterieladekabel ausgebildet ist. Insbesondere kann der oben genannte Stecker zur Verbindung des Batterieladekabels mit einer Steckdose vorgesehen sein. Die oben geschilderte zusätzliche Anordnung der Tülle um den Stecker dient dann insbesondere dem Schutz vor Überhitzung und sichert einen kontinuierlichen Ladevorgang.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittdarstellung einer erfindungsgemäßen Kühlmanschette bzw. eines erfindungsgemäßen Systems in einem Betriebszustand;
- Fig. 2: eine Schnittdarstellung einer weiteren Ausführungsform der erfindungsgemäßen Kühlmanschette bzw. des erfindungsgemäßen Systems im Betriebszustand, wobei die Kühlmanschette einen Bereich der Energieleitung und einen Stecker umgibt;
- Fig. 3: eine Schnittdarstellung einer weiteren Ausführungsform der erfindungsgemäßen Kühlmanschette bzw. des erfindungsgemäßen Systems im Betriebszustand, wobei die Kühlmanschette im Bereich einer Spritzwand eines Kraftfahrzeuges angeordnet ist.

### WEGE ZUR AUSFÜHRUNG DER ERFINDUNG

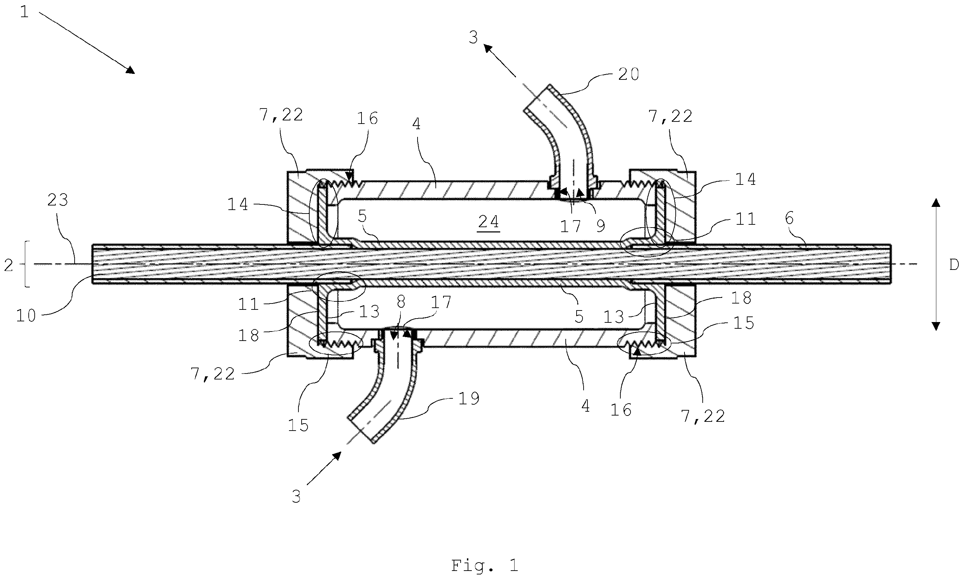

Die Figur 1 zeigt eine Schnittdarstellung einer erfindungsgemäßen Kühlmanschette 1 für mindestens eine Energieleitung 2 bzw. ein erfindungsgemäßes System umfassend die Kühlmanschette 1 und die mindestens eine Energieleitung 2. Die Kühlmanschette 1 bzw. das System befindet sich in Figur 1 in einem Betriebszustand, d.h. eine Tülle 5 wird zumindest abschnittsweise von einem Kühlfluid 3 umströmt.

Die mindestens eine Energieleitung 2 besteht aus einem Leiter 10 und einer elektrischen Isolierung 6. Im dargestellten Ausführungsbeispiel ist nur eine Energieleitung 2 gezeigt, selbstverständlich können aber auch mehrere, z.B. zwei, drei oder mehr, Energieleitungen 2 mittels der Kühlmanschette 1 gekühlt werden.

Die Kühlmanschette 1 umfasst in diesem Ausführungsbeispiel ein Gehäuse 4 aus Kunststoff, die aus einem besonders gut wärmeleitenden Kunststoff, z.B. Ethylen-Propylen-DienKautschuk (EPDM), das mit wärmeleitfähigen Komponenten gefüllt ist, bestehende Tülle 5 und mindestens ein Fixiermittel 7. In den gezeigten Ausführungsbeispielen ist das Gehäuse 4 über der Tülle 5 angeordnet und jeweils als Hohlzylinder ausgeführt, was herstellungstechnisch besonders einfach ist. Die Tülle 5 und das Gehäuse 4 bilden somit ein Kühlvolumen 24 zur Aufnahme des Kühlfluides 3 aus.

In einem Abschnitt der Energieleitung 2, in dem die Kühlmanschette 1 angeordnet ist, ist die Energieleitung 2 in den dargestellten Ausführungsbeispielen abisoliert, d.h. in diesem Bereich ist keine Isolierung 6 auf dem Leiter 10 vorhanden. In dem abisolierten Bereich der Energieleitung 2 befindet sich direkt auf der Oberfläche des Leiters 10 die Tülle 5, wobei in Figur 1 die Tülle 5 den Leiter 10 vollumfänglich berührt. In einem Randbereich 11 überlappt die Tülle 5 die Isolierung 6. Zusätzlich steht im Randbereich 11 ein Bereich 14 der Tülle 5 senkrecht von der Isolierung 6 bzw. senkrecht zu einer Längsachse 23 der Tülle 5 ab und erstreckt sich bis zumindest zu einem Innendurchmesser D des Gehäuses 4, wodurch es zu einer Abdichtung der Kühlmanschette 1 kommt, da die Tülle 5 zwischen dem Gehäuse 4 und dem jeweiligen Fixiermittel 7 eingeklemmt ist und somit kein Kühlfluid 3 austreten kann.

Das Gehäuse 4 ist zwischen zwei Innenseiten 13 der von der Isolierung 6 senkrecht abstehenden Bereiche 14 der Tülle 5 angeordnet und erstreckt sich somit über den gesamten abisolierten Bereich der Energieleitung 2.

In zwei Randbereichen 15 des Gehäuses 4 sind Außengewinde 16 zur Verbindung mit dem jeweiligen Fixiermittel 7 angeordnet. Die Fixiermittel 7 sind in den gezeigten Ausführungsbeispielen durch zwei mit den Außengewinden 16 zusammenwirkenden Überwurfmuttern 22 ausgebildet.

Mit Hilfe der Überwurfmuttern 22 sind die Tülle 5 und das Gehäuse 4 lösbar miteinander verbunden. Die Überwurfmuttern 22 umschließen jeweils eine Außenseite 18 der abstehenden Bereiche 14 der Tülle 5 und sind mit dem Gehäuse 4 verschraubt, wodurch die Tülle 5 gegen das Gehäuse 4 gepresst wird. Dadurch kommt es, wie oben beschrieben, zu einer Abdichtung der Kühlmanschette 1 bzw. des Kühlvolumens 24.

Weiters umfasst das Gehäuse 4 zwei Fluidanschlüsse 8, 9, die in den gezeigten Ausführungsbeispielen jeweils mit einem Gewinde 17 ausgeführt sind, zur lösbaren Verbindung mit beispielsweise Schlauchleitungen 19, 20 eines Kühlmittelbehälters bzw. Kühlfluidreservoirs, wobei ein erster Fluidanschluss 8 zur Einleitung des Kühlfluides 3 in das Gehäuse 4 bzw. das Kühlvolumen 24 vorgesehen ist und ein zweiter Fluidanschluss 9 zur Ableitung des Kühlfluides 3 aus dem Gehäuse 4 bzw. dem Kühlvolumen 24 vorgesehen ist.

Die Fluidanschlüsse 8, 9 sind bezogen auf die Längsachse 23 entgegengesetzt nach außen versetzt an einer Mantelfläche des Gehäuses 4 angeordnet. Im Betriebszustand ist der erste Fluidanschluss 8 mit einer ersten Schlauchleitung 19 verschraubt und der zweite Fluidanschluss 9 mit einer zweiten Schlauchleitung 20. Das Kühlfluid 3 strömt dabei aus der ersten Schlauchleitung 19 kommend über den ersten Fluidanschluss 8 in das Kühlvolumen 24. Im Kühlvolumen 24 umströmt das Kühlfluid 3 zumindest abschnittsweise die Tülle 5. Dabei kommt es zu einer Wärmeübertragung zwischen Tülle 5 und Kühlfluid 3, d.h. die Verlustwärme des Leiters 10 wird über die Tülle 5 an das Kühlfluid 3 abgeleitet. Das erwärmte Kühlfluid 3 strömt über den zweiten Fluidanschluss 9 in die zweite Schlauchleitung 20, mit welcher das erwärmte Kühlfluid 3 beispielsweise einem Heizungskühler (nicht dargestellt) eines Kraftfahrzeuges zugeführt wird. Im Heizungskühler wird dem erwärmten Kühlfluid 3 Wärme entzogen. Anschließend wird das nunmehr erkaltete Kühlfluid 3 in die Kühlmanschette 1 rückgeführt, um dort ein weiteres Mal für Kühlung zu sorgen.

Weiters wäre es denkbar, dass die erfindungsgemäße Kühlmanschette 1 mit einer Scheibenwaschanlage (nicht dargestellt) eines Kraftfahrzeuges über die beiden Schlauchleitungen 19, 20 gekoppelt ist. Dabei strömt das Kühlfluid 3, bei dem es sich in diesem Fall um ein Scheibenwaschfluid, vorzugsweise Wasser und Glykol umfassend, handelt, über die erste Schlauchleitung 19 und den ersten Fluidanschluss 8 aus einem Behälter der Scheibenwaschanlage kommend in das Kühlvolumen 24. Im Kühlvolumen 24 findet, wie oben beschrieben, die Wärmeübertragung zwischen Tülle 5 und Kühlfluid 3 statt. Anschließend strömt das Kühlfluid 3 über den zweiten Fluidanschluss 9 und die zweite Schlauchleitung 20 in das Kühlfluidreservoir bzw. in den Behälter der Scheibenwaschanlage zurück.

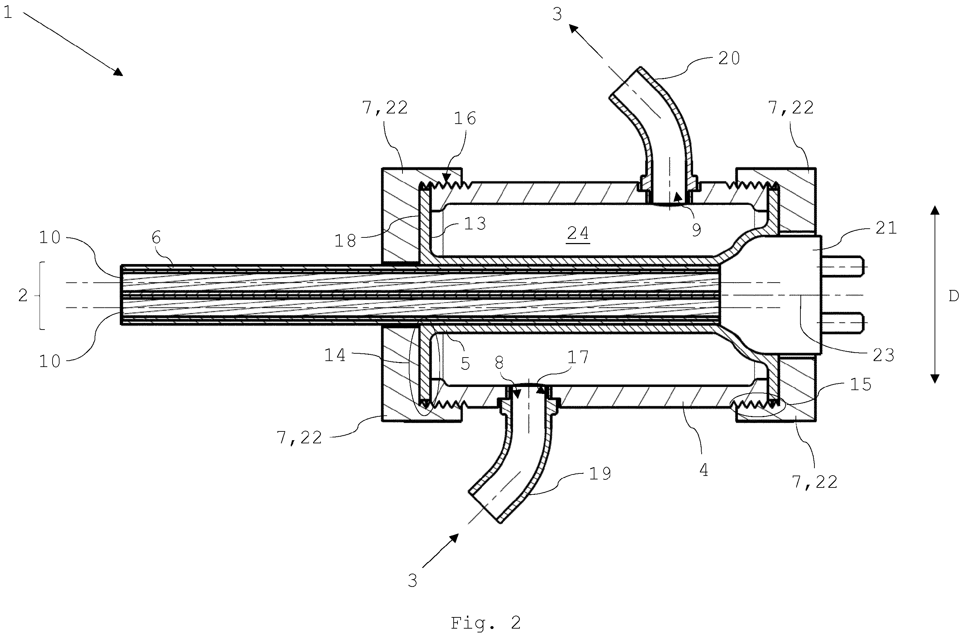

Die Figur 2 zeigt eine Schnittdarstellung einer weiteren Ausführungsform der erfindungsgemäßen Kühlmanschette 1 bzw. des erfindungsgemäßen Systems, wobei die Kühlmanschette 1 einen Bereich der Energieleitung 2 und einen Stecker 21 umgibt. Die Kühlmanschette 1 befindet sich in Figur 2, wie in Figur 1, im Betriebszustand, wobei die beiden Fluidanschlüsse 8, 9 jeweils mit einer der beiden Schlauchleitungen 19, 20 verbunden sind und die Tülle 5 zumindest abschnittsweise von dem Kühlfluid 3 umströmt wird.

Im dargestellten Ausführungsbeispiel ist die Tülle 5 auf einem isolierten Bereich der Energieleitung 2 direkt beim Stecker 21 und auf dem Stecker 21 selbst angeordnet, wobei die Tülle 5 die Isolierung 6 der Energieleitung 2 und des Steckers 21 vollumfänglich berührt.

Das Gehäuse 4 und die Überwurfmuttern 22 sind genauso wie in Figur 1 angeordnet.

Das Kühlfluid 3 strömt dabei aus der ersten Schlauchleitung 19 kommend über den ersten Fluidanschluss 8 in das Kühlvolumen 24. Im Kühlvolumen 24 umströmt das Kühlfluid 3 zumindest abschnittsweise die Tülle 5. Dabei kommt es zu einer Wärmeübertragung zwischen Tülle 5 und Kühlfluid 3, wodurch Wärme sowohl von der Energieleitung 2 im Bereich des Steckers 21 als auch vom Stecker 21 selbst abtransportiert wird. Das erwärmte Kühlfluid 3 strömt über den zweiten Fluidanschluss 9 in die zweite Schlauchleitung 20.

Die Kühlmanschette 1 kann, wie bereits bei Figur 1 beschrieben, mit der Scheibenwaschanlage und/oder mit dem Heizungskühler eines Kraftfahrzeuges gekoppelt sein.

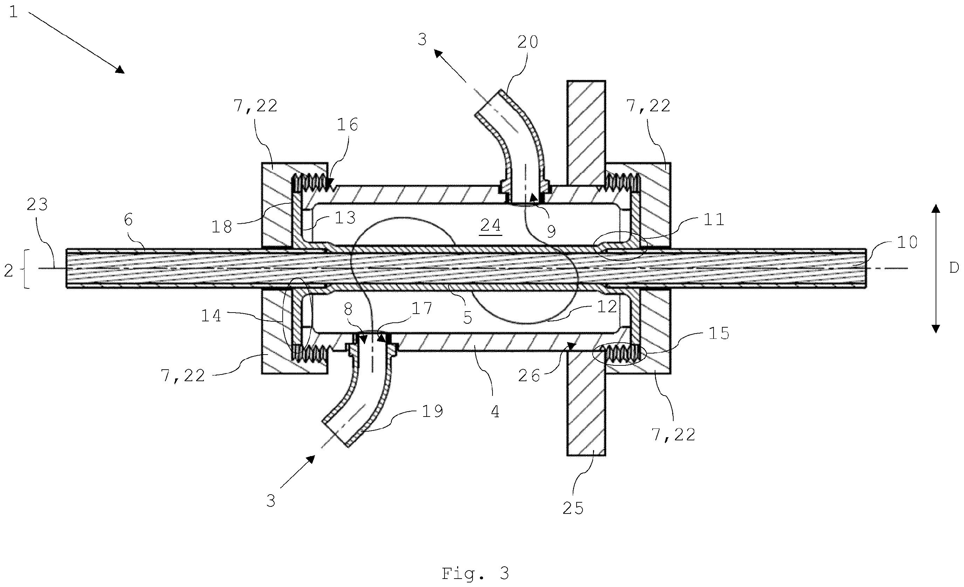

Die Figur 3 zeigt eine Schnittdarstellung der erfindungsgemäßen Kühlmanschette 1 bzw. des erfindungsgemäßen Systems im Betriebszustand, wobei die Kühlmanschette 1 im Bereich einer Spritzwand 25 des Kraftfahrzeuges angeordnet ist.

Im Bereich der Spritzwand 25 ist eine Verwendung von erfindungsgemäßen Kühlmanschetten 1 besonders vorteilhaft, da in diesem Bereich die Energieleitungen 2 bereits standardmäßig durch Tüllen 5, die die Energieleitungen 2 umfänglich umgeben, geführt werden. In diesem Ausführungsbeispiel wird somit die bereits zur Durchführung durch die Spritzwand 25 vorhandene Tülle 5 in der erfindungsgemäßen Kühlmanschette 1 verwendet, wodurch der konstruktive Herstellungsaufwand relativ gering ist.

Eine Bohrung 26 zur Durchführung der Energieleitung 2 in der Spritzwand 25 ist entsprechend vergrößert, um das Gehäuse 4 abschnittsweise in der Spritzwand 25 anordnen zu können. Das Gehäuse 4 ist bezogen auf die Längsachse 23 nicht mittig, sondern nach außen versetzt in der Bohrung 26 angeordnet, sodass eine Überwurfmutter 22 die Spritzwand 25 berührt. Die Berührung der Überwurfmutter 22 und der Spritzwand 25 führt zu einer Erhöhung der Stabilität der Anordnung.

Die Fluidanschlüsse 8, 9 sind bezogen auf die Längsachse 23 entgegengesetzt nach außen versetzt angeordnet.

Es wäre allerdings auch vorstellbar, dass das Gehäuse 4 bezogen auf die Längsachse 23 mittig in der Bohrung 26 angeordnet ist und nur die Fluidanschlüsse 8, 9 bezogen auf die Längsachse 23 nach außen versetzt sind. Auch möglich wäre, dass die Fluidanschlüsse 8, 9 bezogen auf die Längsachse 23 mittig angeordnet sind und das Gehäuse 23 bezogen auf die Längsachse 23 nach außen versetzt ist, wobei sich vorzugsweise eine der Überwurfmuttern 22 und die Spritzwand 25 berühren.

Weiters ist in Figur 3 ein Führungsmittel 12 zur Zwangsführung des Kühlfluides 3 vom ersten Fluidanschluss 8 zum zweiten Fluidanschluss 9 dargestellt, wobei es sich bei dem Führungsmittel 12 um Windungen einer Spiralfeder handelt. Durch das Führungsmittel 4 wird gewährleistet, dass die Tülle 5 vom Kühlfluid 3 vorteilhaft, vorzugsweise vollflächig, umströmt wird.

Es wäre allerdings auch vorstellbar, dass das Führungsmittel 12 nicht nur zwischen dem ersten Fluidanschluss 8 und dem zweiten Fluidanschluss 9 angeordnet ist, sondern auch durch die beiden Schlauchleitungen 19, 20 verläuft.

Ansonsten ist die Kühlmanschette 1 in Figur 3 aufgebaut wie in Figur 1.

### BEZUGSZEICHENLISTE

- 1: Kühlmanschette
- 2: Energieleitung
- 3: Kühlfluid
- 4: Gehäuse
- 5: Tülle
- 6: Isolierung
- 7: Fixiermittel
- 8: Erster Fluidanschluss
- 9: Zweiter Fluidanschluss
- 10: Leiter
- 11: Randbereich
- 12: Führungsmittel
- 13: Innenseite der Tülle in einem abstehenden Bereich der Tülle
- 14: Abstehender Bereich der Tülle
- 15: Randbereich des Gehäuses
- 16: Außengewinde des Gehäuses
- 17: Gewinde der Fluidanschlüsse
- 18: Außenseite der Tülle im abstehenden Bereich
- 19: Erste Schlauchleitung
- 20: Zweite Schlauchleitung
- 21: Stecker
- 22: Überwurfmutter
- 23: Längsachse
- 24: Kühlvolumen
- 25: Spritzwand
- 26: Bohrung

- D: Innendurchmesser des Gehäuses

## Patentansprüche

1. Kühlmanschette (1) zur Ableitung von Wärme von mindestens einer Energieleitung (2) an ein Kühlfluid (3), umfassend eine Tülle (5) zur zumindest abschnittsweisen Durchführung der mindestens einen Energieleitung, ein Gehäuse (4), welches die Tülle (5) zumindest abschnittsweise umgebend angeordnet ist, wobei zwischen der Tülle (5) und dem Gehäuse (4) ein Kühlvolumen (24) zur Aufnahme des Kühlfluides (3) ausgebildet ist, wobei das Kühlvolumen (24) vorzugsweise durch die Tülle (5) und das Gehäuse (4) begrenzt ist, wobei das Gehäuse (4) einen ersten Fluidanschluss (8) zur Einleitung des Kühlfluides (3) und einen zweiten Fluidanschluss (9) zur Ableitung des Kühlfluides (3) umfasst, wobei die Tülle (5) zumindest abschnittsweise von dem Kühlfluid (3) umströmbar ist, **dadurch gekennzeichnet, dass** die Kühlmanschette (1) weiters mindestens ein Fixiermittel (7) umfasst, mittels dessen das Gehäuse (4) an der Tülle (5) lösbar fixiert ist, wobei das mindestens eine Fixiermittel (7) und das Gehäuse (4) unter Zwischenlage der Tülle (5) verschraubbar sind.

2. Kühlmanschette (1) nach Anspruch 1, **dadurch gekennzeichnet, dass** die Tülle (5) und das Gehäuse (4) aus einem Kunststoff bestehen.

3. Kühlmanschette (1) nach einem der Ansprüche 1 bis 2, **dadurch gekennzeichnet, dass** das Gehäuse (4) als Hohlzylinder ausgeführt ist.

4. Kühlmanschette (1) nach einem der Ansprüche 1 bis 3, **dadurch gekennzeichnet, dass** das mindestens eine Fixiermittel (7) als Überwurfmutter (22) ausgebildet ist, wobei vorzugsweise genau zwei Überwurfmuttern (22) vorgesehen sind, die an gegenüberliegenden Seiten des Gehäuses (4) angeordnet sind.

5. Kühlmanschette (1) nach einem der Ansprüche 1 bis 4, **dadurch gekennzeichnet, dass** ein Führungsmittel (12) zur Zwangsführung des Kühlfluides (3) vom ersten Fluidanschluss (8) zum zweiten Fluidanschluss (9) vorgesehen ist, wobei das Führungsmittel (12) vorzugsweise durch ein metallisches Leitelement ausgebildet ist.

6. System umfassend eine Kühlmanschette (1) nach einem der Ansprüche 1 bis 5 und mindestens eine Energieleitung (2), wobei die Tülle (5) die mindestens eine Energieleitung (2), vorzugsweise in einem abisolierten Bereich der Energieleitung (2), zumindest abschnittsweise umgibt.

7. System nach Anspruch 6, **dadurch gekennzeichnet, dass** in einem Randbereich (11) der Kühlmanschette (1) die Tülle (5) und eine Isolierung (6) der mindestens einen Energieleitung (2) überlappend angeordnet sind.

8. System nach einem der Ansprüche 6 bis 7, **dadurch gekennzeichnet, dass** das System ein Kraftfahrzeug umfasst, wobei ein Kühlfluidreservoir vorgesehen ist, welches Kühlfluidreservoir durch einen Behälter einer Scheibenwaschanlage des Kraftfahrzeuges ausgebildet ist, wobei das Kühlfluidreservoir fluidisch mit dem Kühlvolumen (24) mittels der Fluidanschlüsse (8, 9) verbunden ist.

9. System nach einem der Ansprüche 6 bis 8, **dadurch gekennzeichnet, dass** das System dazu eingerichtet ist, mit Hilfe des Kühlfluides (3) im Kühlvolumen (24) Druck aufzubauen, um die Tülle (5) auf die mindestens eine Energieleitung (2) zu pressen.

10. System nach Anspruch 9, **dadurch gekennzeichnet, dass** der Druck mit maximal 6 Bar begrenzt ist.

11. System nach einem der Ansprüche 6 bis 10, **dadurch gekennzeichnet, dass** das System ein Kraftfahrzeug umfasst, wobei die Tülle (5) zumindest abschnittsweise in einer Spritzwand (25) des Kraftfahrzeuges angeordnet ist, wobei auch das Gehäuse (4) zumindest abschnittsweise in der Spritzwand (25) angeordnet ist und/oder das Gehäuse (4) nur auf einer Seite der Spritzwand (25) angeordnet ist.

12. System nach einem der Ansprüche 6 bis 11, **dadurch gekennzeichnet, dass** das System ein Kühlfluid umfasst, welches Kühlfluid (3) Wasser und Glykol umfasst.

13. System nach einem der Ansprüche 6 bis 12, **dadurch gekennzeichnet, dass** mindestens ein mit der mindestens einen Energieleitung (2) verbundener Stecker (21) vorgesehen ist, wobei die Tülle (5) sowohl die mindestens eine Energieleitung (2) als auch den mindestens einen Stecker (21) umgebend angeordnet ist.

14. System nach einem der Ansprüche 6 bis 13, **dadurch gekennzeichnet, dass** die mindestens eine Energieleitung (2) durch mindestens ein Batterieladekabel ausgebildet ist.

## Claims

1. Cooling sleeve (1) for dissipating heat from at least one energy line (2) to a cooling fluid (3), comprising a grommet (5) for the at least partial passage of the at least one energy line, a housing (4), which is arranged surrounding the grommet (5) at least in sections, wherein a cooling volume (24) is formed between the grommet (5) and the housing (4) for accommodating the cooling fluid (3), wherein the cooling volume (24) is preferably delimited by the grommet (5) and the housing (4), wherein the housing (4) comprises a first fluid connection (8) for introducing the cooling fluid (3) and a second fluid connection (9) for discharging the cooling fluid (3), wherein the cooling fluid (3) can flow at least in sections around the grommet (5), **characterized in that** the cooling sleeve (1) further comprises at least one fixing means (7), by means of which the housing (4) is detachably fixed to the grommet (5), wherein the at least one fixing means (7) and the housing (4) can be screwed together with interposition of the grommet (5).

2. Cooling sleeve (1) according to claim 1, **characterized in that** the grommet (5) and the housing (4) are made of a plastic.

3. Cooling sleeve (1) according to one of claims 1 to 2, **characterized in that** the housing (4) is designed as a hollow cylinder.

4. Cooling sleeve (1) according to one of claims 1 to 3, **characterized in that** the at least one fixing means (7) is designed as a union nut (22), wherein preferably exactly two union nuts (22) are provided, which are arranged on opposite sides of the housing (4).

5. Cooling sleeve (1) according to one of claims 1 to 4, **characterized in that** a guide means (12) is provided for forced guiding of the cooling fluid (3) from the first fluid connection (8) to the second fluid connection (9), wherein the guide means (12) is preferably formed by a metallic lead element.

6. System comprising a cooling sleeve (1) according to one of claims 1 to 5 and at least one energy line (2), wherein the grommet (5) surrounds the at least one energy line (2), preferably in a stripped region of the energy line (2), at least in sections.

7. System according to claim 6, **characterized in that** in an edge region (11) of the cooling sleeve (1), the grommet (5) and an insulation (6) of the at least one energy line (2) are arranged in an overlapping manner.

8. System according to one of claims 6 to 7, **characterized in that** the system comprises a motor vehicle, wherein a cooling fluid reservoir is provided, which cooling fluid reservoir is formed by a container of a windshield washer system of the motor vehicle, wherein the cooling fluid reservoir is fluidically connected to the cooling volume (24) by means of the fluid connections (8, 9).

9. System according to one of claims 6 to 8, **characterized in that** the system is arranged to build up pressure in the cooling volume (24) by means of the cooling fluid (3) in order to press the grommet (5) onto the at least one energy line (2).

10. System according to claim 9, **characterized in that** the pressure is limited to a maximum of 6 bar.

11. System according to one of claims 6 to 10, **characterized in that** the system comprises a motor vehicle, wherein the grommet (5) is arranged at least in sections in a bulkhead (25) of the motor vehicle, wherein the housing (4) is also arranged at least in sections in the bulkhead (25) and/or the housing (4) is arranged only on one side of the bulkhead (25).

12. System according to one of claims 6 to 11, **characterized in that** the system comprises a cooling fluid, which cooling fluid (3) comprises water and glycol.

13. System according to one of claims 6 to 12, **characterized in that** at least one plug (21) connected to the at least one energy line (2) is provided, wherein the grommet (5) is arranged surrounding both the at least one energy line (2) and the at least one plug (21).

14. System according to one of claims 6 to 13, **characterized in that** the at least one energy line (2) is formed by at least one battery charging cable.

## Revendications

1. Manchon de refroidissement (1) destiné à évacuer la chaleur d'au moins une conduite d'énergie (2) vers un fluide de refroidissement (3), comprenant une douille (5) pour le passage au moins partiel de l'au moins une conduite d'énergie, un boitier (4) disposé de façon à entourer au moins en partie la douille (5), dans lequel un volume de refroidissement (24) est formé entre la douille (5) et le boitier (4) pour recevoir le fluide de refroidissement (3), lequel volume de refroidissement (24) est de préférence délimité par la douille (5) et le boitier (4), dans lequel le boitier (4) comporte un premier raccord de fluide (8) pour l'introduction du fluide de refroidissement (3) et un deuxième raccord de fluide (9) pour l'évacuation du fluide de refroidissement (3), dans lequel la douille (5) peut être au moins partiellement s'écoule autour par le fluide de refroidissement (3), **caractérisé en ce que** le manchon de refroidissement (1) comprend en outre au moins un moyen de fixation (7) au moyen duquel le boitier (4) est fixé sur la douille (5) de façon amovible, l'au moins un moyen de fixation (7) et le boitier (4) pouvant être vissés en intercalant la douille (5).

2. Manchon de refroidissement (1) selon la revendication 1, **caractérisé en ce que** la douille (5) et le boitier (4) se composent d'une matière plastique.

3. Manchon de refroidissement (1) selon l'une des revendications 1 à 2, **caractérisé en ce que** le boitier (4) est conformé comme un cylindre creux.

4. Manchon de refroidissement (1) selon l'une des revendications 1 à 3, **caractérisé en ce que** l'au moins un moyen de fixation (7) est conformé comme un écrou d'union (22), avec de préférence exactement deux écrous union (22) prévus et disposés sur des côtés opposés du boitier (4).

5. Manchon de refroidissement (1) selon l'une des revendications 1 à 4, **caractérisé en ce qu'**il est prévu un moyen de guidage (12) pour le guidage forcé du fluide de refroidissement (3) du premier raccord de fluide (8) au deuxième raccord de fluide (9), lequel moyen de guidage (12) est de préférence formé par un élément de conduite métallique.

6. Système comprenant un manchon de refroidissement (1) selon l'une des revendications 1 à 5 et au moins une conduite d'énergie (2), dans lequel la douille (5) entoure au moins en partie l'au moins une conduite d'énergie (2), de préférence dans une partie de la conduite d'énergie (2) dont l'isolation a été enlevée.

7. System selon la revendication 6, **caractérisé en ce que** la douille (5) et une isolation (6) de l'au moins une conduite d'énergie (2) se chevauchent dans une région de bord (11) du manchon de refroidissement (1).

8. Système selon l'une des revendications 6 à 7, **caractérisé en ce que** le système comprend un véhicule à moteur, un réservoir de fluide de refroidissement étant prévu et formé par un réservoir d'une installation de lave-glaces du véhicule à moteur, le réservoir de fluide de refroidissement étant en communication de fluide avec le volume de refroidissement (24) au moyen des raccords de fluide (8, 9).

9. Système selon l'une des revendications 6 à 8, **caractérisé en ce qu'**il est aménagé pour constituer une pression dans le volume de refroidissement (24) à l'aide du fluide de refroidissement (3) afin de presser la douille (5) sur l'au moins une conduite d'énergie (2).

10. Système selon la revendication 9, **caractérisé en ce que** la pression est limitée à 6 bars au maximum.

11. Système selon l'une des revendications 6 à 10, **caractérisé en ce que** le système comprend un véhicule à moteur, la douille (5) étant au moins en partie disposée sur un tablier de moteur (25) du véhicule à moteur, le boitier (4) étant aussi disposé au moins en partie dans le tablier de moteur (25) et/ou le boitier (4) n'étant disposé que sur un côté du tablier de moteur (25).

12. Système selon l'une des revendications 6 à 11, **caractérisé en ce que** le système comprend un fluide de refroidissement (3) qui contient de l'eau et du glycol.

13. Système selon l'une des revendications 6 à 12, **caractérisé en ce qu'**il est prévu au moins un connecteur (21) relié à au moins une conduite d'énergie (2), la douille (5) entourant aussi bien l'au moins une conduite d'énergie (2) que l'au moins un connecteur (21).

14. Système selon l'une des revendications 6 à 13, **caractérisé en ce que** l'au moins une conduite d'énergie (2) est formée par au moins un câble de charge de batterie.
